# EUROPÄISCHE PATENTSCHRIFT

(11) **EP 1 652 879 B1**
(45) Veröffentlichungstag und Bekanntmachung des Hinweises auf die Patenterteilung: **15.04.2009**
(21) Anmeldenummer: 05022493.0
(22) Anmeldetag: 14.10.2005
(51) Int. Cl.: C08K 3/36, C08L 11/02, C09J 11/02

(54) **Zubereitungen für den Einsatz in Beton**
Compositions for use in concrete
Compositions pour béton

(30) Priorität: 27.10.2004 DE 102004052170
(43) Veröffentlichungstag der Anmeldung: 03.05.2006
(73) Patentinhaber: Bayer MaterialScience AG, 51368 Leverkusen (DE)
(72) Erfinder: Musch, Rüdiger, Dr., 51467 Bergisch Gladbach (DE); Stepanski, Horst, Dr., 51381 Leverkusen (DE); Böhm, Stefan, Prof. Dr., 38179 Schwülper (DE); Dilger, Klaus, Dr. Prof., 38103 Braunschweig (DE); Mund, Frank, 40223 Düsseldorf (DE)

(56) Entgegenhaltungen:
- WO-A-03/102066
- DE-A- 1 504 775
- GB-A- 122 056
- US-A- 3 502 605
- US-A- 4 476 657

## Beschreibung

Die Erfindung betrifft die Verwendung von Zubereitungen auf Basis wässriger Dispersionen von Polychloropren zur Herstellung von mit diesen ausgerüsteten Faserprodukten, ein Verfahren zu deren Herstellung und die Verwendung dieser ausgerüsteten Faserprodukte zur Herstellung von textil- und faserverstärktem Beton und anderen auf Zement basierenden Produkten.

Beton ist im Bauwesen einer der bedeutendsten Werkstoffe und bietet mehrere Vorteile. Er ist preiswert, dauerhaft, und flexibel hinsichtlich Gestaltung und Herstelltechnik. Dementsprechend vielfältig sind die Anwendungsbereiche, die sowohl im statisch-konstruktiven als auch im nichttragenden Bereich liegen.

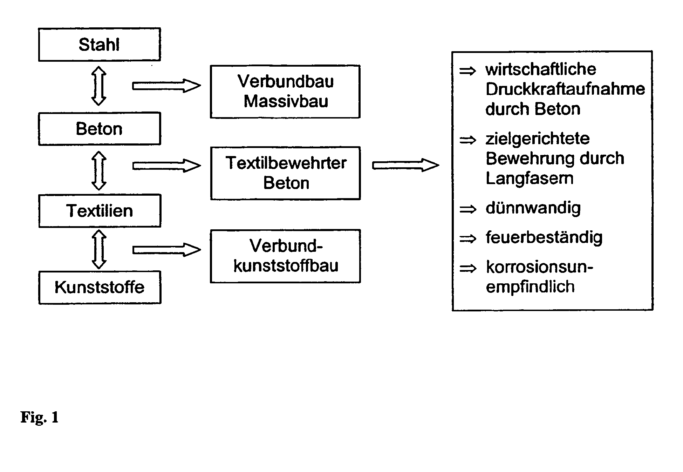

Für die Übertragung von Druckkräften bietet Beton ein besonders günstiges Verhältnis von Kosten und Leistung und wird daher in einem hohen Umfang im Bauwesen eingesetzt (Fig. 1: Eigenschaften textilbewehrten Betons).

Aufgrund seiner geringen Zugfestigkeit ist zur Aufnahme von Zugkräften eine Bewehrung erforderlich, die in der Regel aus Stahl besteht. Zur Sicherstellung des Verbundes und zum Schutz vor Korrosion ist eine Betonstahlbewehrung mit einer mindestens 2 - 3 cm dicken Betondeckung zu versehen. Dies führt zu Bauteildicken von mindestens 4 - 6 cm, je nach Umweltbeanspruchung und Herstellungsverfahren. Setzt man als Bewehrungsmaterial korrosionsunempfindliche, nichtmetallische Werkstoffe ein, sind bekanntlich filigrane und dünnwandige Querschnitte aufgrund der geringeren Betonüberdeckung realisierbar.

Gemäß dem Stand der Technik werden zur Verstärkung dünnwandiger Betonwerkteile z.B. Kurzfasern zugesetzt. Derzeit werden hauptsächlich Kurzfasern eingesetzt, deren Lage und Orientierung im Verbundwerkstoff nicht eindeutig zu definieren sind. Der Anwendungsbereich heutiger mit Kurzfasern verstärkter Betone beschränkt sich daher im Wesentlichen auf mechanisch gering belastete Bauteile wie beispielsweise Estrich und Objekte wie Pflanzkübel etc.

In der WO 03/102066 werden beispielsweise wässrige Polymer-Dispersionen beschrieben, die als Klebstoff zum Verkleben von Bevorzugt flächigen Gebilden eingesetzt werden. Hierbei wird der Klebstoff auf ein erstes Substrat aufgebracht und ein zweites Substrat mit dem ersten unter Druck verklebt. Eine Verwendung von Faserprodukten zur Anmischung von Beton oder Produkten auf Basis von Zement wird hingegen nicht offenbart.

US-A 3,502,605 offenbart Beschichtungen zum Schutz von Stahl- und Holzkonstruktionen gegen den Angriff von Meerwasser und die damit verbundenen Schäden. Die Beschichtung besteht aus einer Chloronrendispersion, hydraulischem Zement und Fasermaterial. Bei den Chloroprendispersionen handelt es um kationisch stabilisierte Dispersionen.

In der US-A 4,476,657 werden Sarkophage beschrieben, die eine dicke äußere Betonwandung und eine innenliegende Kunststofffolie/-Platte aufweisen. Die beiden Schichten werden mit einem Polychloroprenkontaktkleber miteinander verbunden. Eine Anmischung von Beton geht aus US-A 4,476,657 nicht hervor.

In der DE-A 1504775 wird ein wetterbeständiger Schichtstoff bestehend aus einer Unterlage und einem Deckschichtmaterial, das aus einer pigmentierten Polyvinylfluoridfolie, einem elastomeren, Pigment enthaltenden Bindemittel und einem Asbestfilz besteht. Dieses dreilagige Deckschichtmaterial wird mittels einer Asphaltmasse mit der Unterlage verbunden. Dabei dringt die Asphaltmasse in den Asbestfilz ein, so dass das Deckschichtmaterial gut mit der Unterlage verklebt ist. Der iengesetzte Asbestfilz kann mit Polychloropren imprägniert sein. Es handelt sich hierbei also um ein wetterbeständiges Bauteil mit einem Schichtaufbau, nicht jedoch um armierten Beton.

Eine höhere Effektivität in dünnwandigen Betonwerkteilen zeigen Langfasern, die zum Beispiel in Form von Rovings oder Textilien in Richtung der auftretenden Zugspannungen angeordnet werden können.

Um der Faserbetonbauweise auch anspruchsvollere und neuartige Anwendungsfelder zu erschließen, bieten sich technische Textilien mit in Richtung der größten Zugspannungen ausgerichteten Bewehrungsfilamenten an. Technische Textilien (zwei- oder mehrdimensional) wie Gelege, Geflechte, Gewirke oder Konturengewirke können derzeit nur in Einzelfällen bei der industriellen Herstellung textilbewehrter Betonbauteile eingesetzt werden. Der Grund hierfür sind die zur Zeit fehlenden Produktionsverfahren zur Verarbeitung solcher Textilien zu Bauteilen mit komplizierten Geometrien. Bisherige Methoden zur Herstellung textilbewehrter Bauteile erlauben lediglich linear ebene Formen, da in den meisten Fällen die Formstabilität des Textils durch Spannen erfolgt. Gerade bei komplizierteren Geometrien ist ein Spannen bei der industriellen Herstellung nicht oder nur bedingt möglich. Es ist derzeit nicht möglich, die biegeschlaffen Bewehrungstextilien reproduzierbar in solche Bauteile einzulegen.

Gemäß dem Stand der Technik kommen heutzutage für die Bewehrung zementgebundener Baustoffe vor allem Stahl-, Kunststoff- und Glasfasern zum Einsatz. Bei den Kunststofffasern handelt es sich meist um Polypropylen-, aber auch Aramidfasern. Tabelle 1 zeigt typische mechanische Parameter verschiedener Fasern.

**Tabelle 1: Eigenschaften möglicher Bewehrungsfasern.**

| **Material** | **Dichte [g/cm³]** | **Zug-Festigkeit [GPa]** | **E-Modul [GPa]** |
|---|---|---|---|
| Alkalisch beständiges AR-Glas | 2.5-2.7 | 1.7-2.0 | 74 |
| Carbon | 1.6-2.0 | 1.5-3.5 | 180-500 |
| Aramid | 1.44-1.45 | 2.8-2.9 | 59-127 |
| Polypropylen | 1.0 | 0.5-0.75 | 5-18 |

Innerhalb der großen Gruppe der verschiedenen Gläser eignen sich praktisch nur die so genannten AR-Glasfasern, da nur sie einen ausreichend hohen Widerstand in der hochalkalischen Umgebung zementgebundener Baustoffe aufweisen.

Im Vortrag "USE OF ADHESIVES FOR TEXTILE-REINFORCED CONCRETE" von S. Böhm, K. Dilger und F. Mund, 26^{th} Annual Meeting of the Adhesive Society in Myrtle Beach, SC, USA, Febr. 26, 2003, wurde gezeigt, dass die rechnerische Garnzugfestigkeit/Tragfähigkeit der Bewehrungstextilien im Beton nicht erreicht wird. Die in dieser Veröffentlichung beschriebenen Garnzugversuche zeigten, dass durch die Penetration mit einer polymeren Phase die Garnzugfestigkeit um 30-40% gesteigert werden kann. Eine solche Penetration wurde dabei durch Tränkung von Faserbündeln (sogenannten Rovings) mit diversen wässrigen Polymerdispersionen, u. a. auf Basis Polychloropren, als auch mit reaktiven Harzformulierungen auf Basis Epoxidharz oder ungesättigter Polyester erreicht.

Bekannt sind drei Methoden zur polymeren Beschichtung und Tränkung von textilen Betonverstärkungsfasern:
**Methode 1:** Die erste Methode basiert auf einem 2-stufigen System. Die Filamente oder Rovings werden erst durch eine polymere Phase beschichtet oder penetriert und danach in Feinbeton eingebettet. Hierfür eingesetzte Polymere sind wässrige Dispersionen auf Basis von Polychloropren, Acrylat, Chlorkautschuk, Styrolbutadien oder reaktive Systeme auf Epoxidharzbasis und auf Basis ungesättigter Polyester. Die Penetration der Rovings kann durch eine Beschichtung der Filamente bei der Roving-Herstellung oder durch Tränkung der Rovings vor oder nach der Textilherstellung erfolgen. Die Aushärtung bzw. Vernetzung der polymeren Phase erfolgt vor dem Einbringen der Verstärkungstextilien in den Beton. Danach werden die so behandelten Rovings oder Textilien in Feinbeton eingebettet. Um die mechanischen Eigenschaften der Fasern nutzen zu können, muss das Harz mindestens genauso gute Dehnungseigenschaften wie die Fasern aufweisen.
**Methode 2:** Die zweite Methode beinhaltet das Einbringen von thermoplastischen Filamenten bei der Roving-Herstellung, die dann aufgeschmolzen werden, die Filamente benetzen und nach dem Erstarren zum inneren Adhäsionsverbund führen. Es werden dabei aber keine Friktionsspinngame verwendet, sondern bei der Garnherstellung thermoplastische Filamente hinzugegeben.
**Methode 3:** Die dritte Methode basiert auf einem 1-stufigen System. Bei dem 1-stufigen System wird mit dem Feinbeton zugegebenen Polymeren während der Frischbetonphase eine Tränkung der Textilien erreicht.

Teil der der vorliegenden Erfindung zugrunde liegenden Aufgabenstellung ist die Verbesserung der Eigenschaften der zur Bewehrung verwendeten Faserprodukte, die nach der Methode 1 ausgerüstet werden. Polychloropren in Form einer stark alkalischen wässrigen Dispersion erscheint aufgrund seiner bekannten Eigenschaften hier besonders geeignet zu sein, insbesondere wenn es stark kristallisationsfähig ist.

Es ist bekannt, dass solch ein Polychloropren in alkalischer Umgebung chemisch hoch beständig ist. Daher bringt dieses Polymer für den Einsatz im Beton gute Voraussetzungen mit sich.

Die werkstoffmechanischen Eigenschaften des textilverstärkten Betons sind abhängig von der Lage der textilen Bewehrung. Es ist bekannt, dass bei Raumtemperatur hochkristallines Polychloropren in Form von wässrigen Dispersionen ein gutes Durchtränken der Fasern erlaubt. Durch die Kristallinität wird das durchtränkte Textil nach dem Trocknen so versteift, dass es biegesteif als geometrisch fixierte Bewehrung in die Schalung eingebracht werden kann.

Unter Erwärmen lässt sich die teilkristalline Struktur in einen amorphen Zustand überführen, so dass das textile Flächengebilde sich in die gewünschte dreidimensionale Form umformen lässt, in der es nach Erkalten und Rekristallisation wieder biegesteif verbleibt.

Die in den Beton eingeleiteten mechanischen Spannungen sollen vorzugsweise unter Vermeidung örtlicher Spannungsspitzen in den gesamten Garnquerschnitt des Textils gleichmäßig verteilt werden und unter Beanspruchung einen möglichst hohen Verbund zwischen Betonmatrix und Textil gewährleisten. Diese Aufgabe erfüllt die zum Durchtränken des Textils erfindungsgemäß verwendete Zubereitung. Aber auch die Haftung von Beton auf einzelnen Fasern sollte verbessert werden, um Betonteilen, die zur Armierung eingemischte Einzelfasern enthalten, z.B. Estrich, in ihren Eigenschaften zu verbessern

Daher war es erforderlich, die Zusammensetzung einer auf Polychloropren-Dispersion basierenden Zubereitung derart zu modifizieren, dass dadurch die mechanischen Eigenschaften von Betonbauteilen, welche mit Faserprodukten armiert sind, die ihrerseits wiederum mit diesen Zubereitungen behandelt wurden, wesentlich aufgewertet werden.

Faserprodukte im Sinne der vorliegenden Erfindung sind Fasern, Rovings, Garne, Textilien, Gewirke, Gelege oder Vliesstoffe.

Die der vorliegenden Erfindung zugrunde liegende Aufgabe kann durch die Verwendung einer wässrigen alkalischen Dispersion für das Tränken von zur Verstärkung von Beton eingesetzten Faserprodukten, die außer Polychloropren zusätzlich anorganische Feststoffe, vorzugsweise aus der Gruppe der Oxide, Carboxide und Silikate, besonders bevorzugt Siliciumdioxyd, vorzugsweise in Form von Nano-Partikeln enthält, gelöst werden. Die Wirksamkeit der anorganische Feststoffe wird noch erhöht, wenn das Polychloropren einen besonders hohen Gehalt an Hydroxyl-Gruppen sowie Gelanteile enthält. Die Festigkeitseigenschaften erreichen maximale Werte, wenn nach dem Tränken die Trocknung der Faserprodukte bei höheren Temperaturen, im allgemeinen oberhalb von 20°C, vorzugsweise Temperaturen oberhalb 100°C, besonders bevorzugt bis 220°C, erfolgt, vor allem, wenn unter den anorganischen Feststoffen Zinkoxid ist.

Gegenstand der vorliegenden Erfindung sind verstärkte Beton- und Zement-basierende Produkte enthaltend getränkte Faserprodukte aus
A) Faserprodukten aus der Gruppe bestehend aus Fasern, Rovings, Garnen, Textilien, Gewirken, Gelegen und Vliesstoffen und
B) Zubereitungen aus
   a) 20 - 99 Gew.-% einer wässrigen Dispersion auf Basis Polychloropren,
   b) 1-80 Gew.-% einer wässrigen Suspension auf Basis von anorganischen Feststoffen aus der Gruppe der Oxide, Carboxide und Silikate, die zu mehr als 20 Gew.-% aus Siliciumdioxid, bevorzugt Silanol-Gruppen enthaltend, besteht, mit einer Primärpartikelgröße zwischen 1 bis 400 nm,
   c) gegebenenfalls zusätzlich anderen Polymer-Dispersionen, insbesondere aus der Gruppe der Polyacrylate, Polyacetate, Polyurethane, Polyharnstoffe, Kautschuke und Epoxide sowie
   d) gegebenenfalls zusätzlich enthaltend bei Polymerdispersionen üblichen Additiven
sowie die getränkten Faserprodukte umschließende Beton- oder Zement- basierende Produkte.

Das Polychloropren enthält bevorzugt in 0,1 bis 1,5 % der polymerisierten monomeren Gruppen chemisch angebundene Hydroxid-Gruppen.

Gegenstand der vorliegenden Erfindung ist ebenfalls die Verwendung von getränkten Faserprodukten zur Armierung von Beton und anderen Produkten auf Basis von Zement, wobei die getränkten Faserprodukte aus
A) Faserprodukten aus der Gruppe bestehend aus Fasern, Rovings, Garnen, Textilien, Gewirken, Gelegen und Vliesstoffen und
B) Zubereitungen aus
   a) 20 - 99 Gew.-% einer wässrigen Dispersion auf Basis von Polychloropren,
   b) 1-80 Gew.-% einer wässrigen Suspension auf Basis von anorganischen Feststoffen aus der Gruppe der Oxide, Carboxide und Silikate, die zu mehr als 20 Gew.-% aus Siliciumdioxid, bevorzugt Silanol-Gruppen enthaltend, besteht, mit einer Primärpartikelgröße zwischen 1 bis 400 nm,
   c) gegebenenfalls zusätzlich anderen Polymer-Dispersionen, insbesondere aus der Gruppe der Polyacrylate, Polyacetate, Polyurethane, Polyharnstoffe, Kautschuke und Epoxide sowie
   d) gegebenenfalls zusätzlich enthaltend bei Polymerdispersionen üblichen Additiven bestehen.

Die Polychloropren-Dispersion (a) ist grundsätzlich nach Methoden des Stands der Technik erhältlich, vorzugsweise durch:
- Polymerisation von Chloropren in Gegenwart von 0 - 1 mmol eines Reglers, bezogen auf 100 g Monomer, bei Temperaturen von 0°C - 70 °C, wobei die Dispersion einen in organischen Lösemitteln unlöslichen Anteil von 0 - 30 Gew.-%, bezogen auf das Polymere, hat,
- Entfernung des restlichen, nicht polymerisierten Monomeren durch Wasserdampfdestillation
- Lagerung der Dispersion, bei Temperaturen von 50°C - 110°C, wobei der in organischen Lösemitteln unlösliche Anteil (Gelanteil) bei 0,1 Gew. % - 60 Gew.-% ansteigt, Erhöhung des Feststoffanteils auf 50 - 64 Gew.-%, durch einen Aufrahmprozess

Im Anschluss an das erfindungsgemäße Tränken von Faserprodukten mit der Zubereitung erfolgt in einer bevorzugten Ausführungsform der Erfindung die Vernetzung der Mischung auf dem Substrat nach Entfernung des Wassers bei Temperaturen von 20°C - 220 °C.

Die Herstellung von Polychloropren ist seit langem bekannt, sie erfolgt durch Emulsionspolymerisation im alkalischen wässrigen Medium, vgl. "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York 1965; "Methoden der Organischen Chemie" (Houben-Weyl) XIV/1, 738 f. Georg Thieme Verlag Stuttgart 1961.

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium und Ammoniumsalze von langkettigen Fettsäuren, Kolophonium und Kolophoniumderivate, höhermolekulare Alkoholsulfate, Arylsulfonsäuren, Formaldehyd-kondensate von Arylsulfonsäuren, nichtionische Emulgatoren auf Polyethylenoxid- und Polypropylenoxidbasis sowie emulgierend wirkende Polymere wie Polyvinylalkohol (DE-A 2 307 811, DE-A 2 426 012, DE-A 2 514 666, DE-A 2 527 320, DE-A 2 755 074, DE-A 3 246 748, DE-A 1 271 405, DE-A 1 301 502, US-A 2 234 215, JP-A 60-31 510).

Erfindungsgemäß geeignete Polychloropren-Dispersionen werden durch Emulsionspolymerisation von Chloropren und eines mit Chloropren copolymerisierbaren ethylenisch ungesättigten Monomeren in alkalischem Medium hergestellt Besonders bevorzugt sind Polychloropren Dispersionen, die durch kontinuierliche Polymerisation hergestellt werden, wie z.B. beschrieben in der WO-A 02/24825, Beispiel 2 und DE 3 002 734 Beispiel 6, wobei der Reglergehalt zwischen 0,01 % und 0,3 % variiert werden kann.

Die zur Viskositätseinstellung erforderlichen Kettenübertragungsmittel sind z.B. Mercaptane

Besonders bevorzugte Kettenübertragungsmittel sind n-Dodecylmercaptan und die gemäß DE-A 3 044 811, DE-A 2 306 610 und DE-A 2 156 453 verwendeten Xanthogen-disulfide.

Nach der Polymerisation wird das restliche Chloropren Monomer durch eine Wasserdampfdestillation entfernt. Sie wird durchgeführt wie z.B. beschrieben in "W.Obrecht in Houben-Weyl: Methoden der organischen Chemie Bd. 20, Teil 3, Makromolekulare Stoffe, (1987) S. 852".

In einer bevorzugten Ausführungsform der vorliegenden Erfindung wird die auf diese Weise hergestellte monomerarme Polychloropren-Dispersion anschließend bei höheren Temperaturen gelagert. Dabei wird einmal ein Teil der labilen Chloratome abgespalten und ein Polychloropren-Netzwerk aufgebaut, das sich in organischen Lösungsmitteln nicht löst (Gel).

In einem weiteren Schritt wird durch einen Aufrahmprozess der Feststoffgehalt der Dispersion vorzugsweise erhöht. Diese Aufrahmung erfolgt z.B. durch Zusatz von Alginaten, wie in "Neoprene Latices , John C. Carl, E.I. Du Pont 1964, S.13" oder EP-A 1 293 516 beschrieben.

Wässrige Dispersionen von anorganischen Feststoffen, vorzugsweise aus der Gruppe der Oxide, Carboxide und Silikate, besonders bevorzugt Siliciumdioxyd, sind bekannt. Je nach Herstellprozess liegen sie in unterschiedlicher Struktur vor.

Erfindungsgemäß geeignete Siliziumdioxid-Dispersionen können auf Basis von Kieselsol, Kieselgel, pyrogene Kieselsäuren oder Fällungskieselsäuren oder Mischungen der genannten, erhalten werden.

Bevorzugt werden erfindungsgemäß solche wässrigen Dispersionen von anorganischen Feststoffen eingesetzt, deren Partikel eine Primärpartikelgröße von 1 bis 400 nm, bevorzugt 5 bis 100 nm und besonders bevorzugt 8 bis 50 nm aufweisen. Generell können die Teilchengrößen der anorganischen Feststoffe durch mahlen auf die gewünschte Größe eingestellt werden was insbesondere für gefällte Kieselsäuren gilt. Bevorzugte erfindungsgemäße Zubereitungen sind solche, in denen die Partikel der anorganischen Feststoffe, z.B. die SiO₂-Partikel einer Siliciumdioxid-Dispersion b) als diskrete unvernetzte Primärpartikel vorliegen. Es ist ebenfalls bevorzugt, dass die Partikel über Hydroxylgruppen an der Partikel-Oberfläche verfügen. Besonders bevorzugt werden als wässrige Dispersionen von anorganischen Feststoffen wässrige Kieselsäuresole eingesetzt. Erfindungsgemäß einsetzbare Siliciumdioxid-Dispersionen sind aus WO2003/102066 bekannt.

Der Feststoff in der Suspension (b) besteht zu mehr als 20 Gew.-% aus Siliciumdioxid, bevorzugt Silanol-Gruppen enthaltend.

Die Primärpartikelgröße des Siliciumdioxids beträgt zwischen 1 bis 400 nm, bevorzugt 5 bis 100 nm und besonders bevorzugt 8 bis 50 nm.

Eine wesentliche Eigenschaft der erfindungsgemäß eingesetzten Dispersionen von anorganischen Feststoffen ist, dass sie in den Formulierungen selbst bei Zusatz von wasserlöslichen Salzen (Elektrolyt) oder Substanzen, die partiell in Lösung gehen können und den Elektrolytgehalt der Dispersion erhöhen, wie z.B. Zinkoxid, nicht oder nur geringfügig verdickend wirken, wobei ihre verdickende Wirkung in Formulierungen aus Polychloropren-Dispersionen 2000 mPa s, bevorzugt 1000 mPa s, nicht übersteigen soll. Das gilt insbesondere für Kieselsäuren.

Zur Herstellung der erfindungsgemäß eingesetzten Zubereitung werden die Mengenverhältnisse der einzelnen Komponenten so gewählt, dass die resultierende Dispersion einen Gehalt an dispergierten Polymeren von 30 bis 60 Gew.-% aufweisen, wobei die Anteile der Polychloropren-Dispersion (a) von 20 bis 99 Gew.-% und der Dispersion von anorganischen Feststoffen (b) von 1 bis 80 Gew.-% betragen, wobei sich die Prozentangaben auf das Gewicht nichtflüchtiger Anteile beziehen und zu 100 Gew.-% addieren.

Bevorzugt enthalten die Zubereitungen einen Anteil von 70 Gew.-% bis 98 Gew.-% einer Polychloropren-Dispersion (a) und einen Anteil von 2 Gew.-% bis 30 Gew.-% einer Dispersion von anorganischen Feststoffen (b), wobei sich die Prozentangaben auf das Gewicht nichtflüchtiger Anteile beziehen und zu 100 Gew.-% addieren.

Die Polychloropren-Dispersionen (a) können gegebenenfalls auch andere Dispersionen, wie z.B. Polyacrylat-, Polyvinylidenchlorid-, Polybutadien-, Polyvinylacetat- oder Styrol-Butadien-Dispersionen, in einem Anteil von bis zu 30 Gew.-% bezogen auf die gesamte Dispersion (a) enthalten.

Die erfindungsgemäß eingesetzten Dispersionen (a) und/oder (b) oder die gesamte Zubereitung können gegebenenfalls weitere Hilfs- und Zusatzmittel enthalten, die z.B. aus der Klebstoff- und Dispersions-Technologie bekannt sind, z.B. Harze, Stabilisatoren, Alterungsschutzmittel, Vernetzer und Vernetzungsbeschleuniger. Beispielsweise können Füllstoffe wie Quarzmehl, Quarzsand, Schwerspat, Calciumcarbonat, Kreide, Dolomit oder Talkum, gegebenenfalls zusammen mit Netzmitteln, beispielsweise Polyphosphaten, wie Natriumhexametaphosphat, Naphthalinsulfonsäure, Ammonium- oder Natriumpolyacryl-Säuresalze zugesetzt werden, wobei die Füllstoffe in Mengen von 10 bis 60 Gew.-%, bevorzugt von 20 bis 50 Gew.-%, und die Netzmittel in Mengen von 0,2 bis 0,6 Gew. -%, alle Angaben bezogen auf nichtflüchtige Anteile, zugesetzt werden. Die Zubereitung enthält bis zu 10 Gew.-% Zinkoxid.

Den Dispersionen (a) und/oder (b) oder der gesamten Zubereitung können weitere geeignete Hilfsmittel wie beispielsweise organische Verdickungsmittel, wie Cellulosederivate, Alginate, Stärke, Stärkederivate, Polyurethan-Verdickungsmittel oder Polyacrylsäure in Mengen von 0,01 bis 1 Gew.-%, bezogen auf nichtflüchtige Anteile, zugegeben werden oder anorganische Verdickungsmittel, wie beispielsweise Bentonite, in Mengen von 0,05 bis 5 Gew.-%, bezogen auf nichtflüchtige Anteile, wobei die verdickende Wirkung in der Formulierung 2000 mPa s, bevorzugt 1000 mPa s nicht überschreiten soll.

Zur Konservierung können die Zusammensetzungen auch Fungizide zugesetzt werden. Diese kommen in Mengen von 0,02 bis 1 Gew.-%, bezogen auf nichtflüchtige Anteile, zum Einsatz. Geeignete Fungizide sind beispielsweise Phenol- und Kresolderivate oder zinnorganische Verbindungen oder Azolderivate wie Tebuconazol ^{INN} oder Ketoconazol ^{INN}.

Gegebenenfalls können auch klebrigmachende Harze wie z.B. unmodifizierte oder modifizierte Naturharze wie Kolophoniumester, Kohlenwasserstoffharze oder synthetische Harze wie Phthalatharze erfindungsgemäßen Zusammensetzungen oder den zu ihrer Herstellung eingesetzten Komponenten in dispergierter Form zugesetzt werden (siehe z.B. in "Klebharze" R. Jordan, R. Hinterwaldner, S. 75-115, Hinterwaldner Verlag München 1994). Bevorzugt sind Alkylphenolharz- und Terpenphenolharz-Dispersionen mit Erweichungspunkten größer 70°C, besonders bevorzugt größer 110°C.

Ebenfalls möglich ist ein Einsatz organischer Lösungsmittel, wie beispielsweise Toluol, Xylol, Butylacetat, Methylethylketon, Ethylacetat, Dioxan oder deren Gemische oder Weichmacher, wie beispielsweise solche auf Adipat-, Phthalat- oder Phosphatbasis in Mengen von 0,5 bis 10 Gew.-Teile, bezogen auf nichtflüchtige Anteile.

Die erfindungsgemäß zu verwendenden Zubereitungen werden hergestellt, indem man die Polychloropren-Dispersion (a) mit der Dispersion von anorganischen Feststoffen (b) mischt und gegebenenfalls die üblichen Hilfs- und Zusatzmittel der erhaltenen Mischung oder beiden oder einzelnen Komponenten zugibt.

Ein bevorzugtes Verfahren zur Herstellung der erfindungsgemäß zu verwendenden Zubereitungen ist dadurch gekennzeichnet, dass zunächst die Polychloropren-Dispersion (a) mit den Hilfs- und Zusatzmitteln vermischt und eine Dispersion von anorganischen Feststoffen (b) während oder nach deren Vermischung zugegeben werden.

Der Auftrag der erfindungsgemäß zu verwendenden Zubereitungen kann auf bekannte Weisen, z.B. durch Streichen, Gießen, Spritzen, oder Tauchen durchgeführt werden. Die Trocknung des erzeugten Films kann bei Raumtemperatur oder erhöhter Temperatur bis zu 220°C erfolgen.

Die erfindungsgemäßen zu verwendenden Zubereitungen können auch als Klebstoffe verwendet werden, beispielsweise zum Verkleben beliebiger Substrate gleicher oder verschiedener Art eingesetzt werden. Die Klebstoffschicht auf bzw. in derart erhaltenen Substraten kann anschließend vernetzt werden. Die so erhaltenen Substrate können gegebenenfalls zur Verstärkung (Armierung) von Beton eingesetzt werden.

### Beispiele:

### Herstellung der Polychloropren-Dispersionen

Die Polymerisation des Chloroprens bzw. der Polychloropren-Dispersion erfolgt durch einen kontinuierlichen Prozess, wie er in der EP-A 0 032 977 beschrieben ist.

### Beispiel 1

In den ersten Reaktor einer Polymerisationskaskade, bestehend aus 7 gleichen Reaktoren mit einem Volumen von je 50 Liter werden die wässrige Phase (W) und die Monomerphase (M) über eine Mess- und Regelapparatur in stets konstantem Verhältnis sowie die Aktivatorphase (A) eingefahren. Die mittlere Verweilzeit je Kessel beträgt 25 Minuten. Die Reaktoren entsprechen denen in der DE-A 2 650 714 beschriebenen (Angaben in Gew.-Teilen pro 100 g Gew.-Teile eingesetzte Monomere).

| (M) = Monomerphase: | |
|---|---|
| Chloropren | 100,0 Gew.-Teile |
| n-Dodecylmercaptan | 0,11 Gew.-Teile |
| Phenothiazin | 0,005 Gew.-Teile |

| (W) = wässrige Phase: | |
|---|---|
| Entsalztes Wasser | 115,0 Gew.-Teile |
| Natriumsalz disproportionierter Abietinsäure | 2,6 Gew.-Teile |
| Kaliumhydroxyd | 1,0 Gew.-Teile |

| (A) = Aktivatorphase: | |
|---|---|
| 1 %ige wässrige Formamidinsulimsäurelösung | 0,05 Gew.Teile |
| Kaliumpersulfat | 0,05 Gew.Teile |
| Anthrachinon-2-sulfonsäure-Na-salz | 0,005 Gew.Teile |

Bei einer Innentemperatur von 15°C springt die Reaktion leicht an. Durch eine Außenkühlung wird die freiwerdende Polymerisationswärme abgeführt und die Polymerisationstemperatur auf 10°C gehalten. Bei einem Monomerumsatz von 70 % wird die Reaktion durch Zugabe von Diethylhydroxylamin abgebrochen. Das restliche Monomere wird durch Wasserdampfdestillation aus dem Polymeren entfernt. Der Feststoffgehalt liegt bei 33 Gew.-%, der Gelgehalt bei 0 Gew.-%, der pH Wert bei 13.

Nach einer Polymerisationszeit von 120 Stunden wird die Polymerisationsstraße ausgefahren

Anschließend wird die so hergestellte Dispersion auf folgende Weise aufgerahmt.

Festes Alginat (Manutex) wird in entionisiertem Wasser aufgelöst und eine 2 Gew.-%ige AlginatLösung hergestellt. In acht 250ml Glasflaschen werden je 200 g der Polychloropren-Dispersion vorgelegt und mit jeweils 6 bis 20g der Alginatlösung - in 2g Schritten - eingerührt. Nach einer Lagerzeit von 24 Stunden wird die Menge des entstandenen Serums über dem Dicklatex gemessen. Die Alginatmenge der Probe mit der stärksten Serumbildung wird mit 5 multipliziert und ergibt die optimale Alginatmenge für die Aufrahmung von 1 kg Polychloropren-Dispersion.

### Beispiel 2)

Man verfährt wie im Beispiel 1, reduziert jedoch in der Monomerphase den Reglergehalt auf 0,03 Gew.-%.

Der Feststoffgehalt liegt bei 33 Gew.-% und der Gelgehalt bei 1,2 Gew.-%, der pH Wert bei 12,9.

Nach der Wasserdampfdestillation wird die Dispersion in einem isolierten Lagertank 3 Tage bei einer Temperaturen von 80°C getempert, wobei die Temperatur erforderlichenfalls durch eine Zusatzheizung nachreguliert wird und der Anstieg des Gelgehaltes im Latex an Hand von Proben gemessen.

Auch diese Dispersion wird wie im Beispiel 1 beschrieben aufgerahmt.

### B) Eingesetzte Substanzen:

| | | | |
|---|---|---|---|
| Polychloropren-Dispersion aus Beispiel 1 | | | Gel: 0%, Feststoff: 58%, pH: 12,9 |
| Polychloropren-Dispersion aus Beispiel 2 | | | Gel: 16%, Feststoff: 56%, pH: 12,7 |
| Siliciumdioxid-Dispersion | Dispercoll^{®} S 5005 | Bayer MaterialScience AG | Feststoff: 50 %, Partikelgröße: 50 nm, Oberfläche: 50 m²/g |
| Acrylat-Dispersion | Plextol^{®} E 220 | Polymer Latex GmbH & Co. KG | Feststoff. 60 %, Partikelgröße: 630 nm, pH: 2,2 |
| Alterungsschutzmittel | Rhenofit^{®} DDA 50 EM | Rhein Chemie GmbH | 50% Feststoff in Wasser |
| Zinkoxid | VP 9802 | Borchers GmbH | 50% Feststoff in Wasser |
| Terpen-Phenol-Harz Dispersion | HRJ 11112 | Schenectady International, Inc. | 50% Feststoff in Wasser |

### C) Beispiele:

Es wurden folgende Rezepturen hergestellt:

| **Rezeptur Nr.** | **1** | **2** | **3** | **4** | **5** |
|---|---|---|---|---|---|
| Polychloropren Dispersion 1 | 100 | 100 | 100 | - | - |
| Polychloropren Dispersion 2 | - | - | - | 100 | 100 |
| Dispercoll^{®} S 5005 | - | - | 30 | 30 | 30 |
| Plextol^{®} E 220 | 30 | - | - | - | - |
| Harz HRJ 11112 | - | 30 | - | - | - |
| Rhenofit^{®} DDA 50 EM | 2 | 2 | 2 | 2 | 2 |
| ZnO Borchers | 4 | 4 | - | - | 4 |

| | | | | | |
|---|---|---|---|---|---|
| Beispiele 1 und 2: Vergleich; Beispiele 3 bis 5: Erfindungsgemäß. | | | | | |

Mit diesen Rezepturen wurden alkaliresistente Vetrotex^{®}-Glasfaser-Rovings der Stärke 2400 Tex getränkt und anschließend an der Labor-Raumluft unter Gewichtsbelastung hängend getrocknet.

Die auf diese Weise hergestellten Prüfkörper wurden hinsichtlich der "Pull-Out"-Kräfte aus einem Betonklotz geprüft. Dabei wurde wie folgt verfahren:

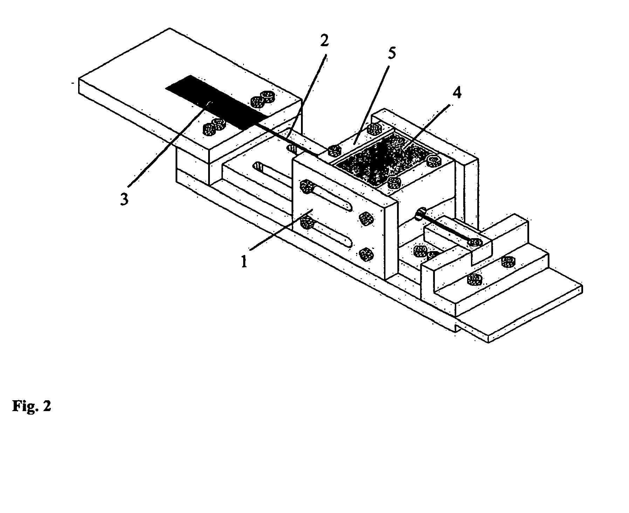

Zur Herstellung der Probekörper für den Pull- Out- Versuch wird die in Fig. 2 dargestellte Form bzw. Schalung 1 verwendet: Die Faser 2 wird in die Schalung eingespannt 3. Der Raum zum Einfüllen des Betons 4 ist so gestaltet, dass die Dicke des Pull- Out- Körpers durch Verschieben einer Wand 5 variiert werden kann. Alle Spalte und die Durchführung des Rovings aus der Schalung werden durch Dichtmasse abgedichtet.

Die Beton-Rezeptur wurde auf folgende Weise hergestellt:

| **Einsatzstoff** | **Typ** | | |
|---|---|---|---|
| | | | |
| | | | |
| | | **Herkunft** | **Gew.-Teile** |
| **Bindemittel** | | | |
| Zement | CEM I 52,5 | Spenner Zement, Erwitte | 490 |
| **Zusatzstoffe** | | | |
| Flugasche | Safament HKV | Jacob GmbH, Völklingen | 175 |
| Silikastaub-Slurry | EMSAC 500 DOZ | Woermann, Darmstadt | 70 |
| Fließmittel | FM 40 | Sika Addiment, Leimen | 10,5 |
| **Zuschlag** | | | |
| Quarzmehl | Milisil W3 | Quarzwerke Frechen | 499 |
| Sand | 0,2 - 0,6 mm | Quarzwerke Frechen | 714 |
| **Weitere Angaben** | | | |
| Wasser | Leitungswasser | STAWAG, Aachen | 245 |
| | | | |
| **Mischanweisung** | | | |
| | | Alle Stoffe auf 0,1 g genau einwiegen. | |
| | | 1. Zement, Flugasche und Zuschlag homogenisieren (Teilmischung 1) | |
| | | 2. Wasser, Silika-Slurry und 50 % Fließmittel in dieser Reihenfolge in den Mörtel-Mischer (DIN 196-1) geben (Teilmischung 2) | |
| | | 3. Teilmischung 1 vorsichtig zu Teilmischung 2 geben; 1,5 min bei niedriger Geschwindigkeitsstufe mischen | |
| | | 4. 2 min Pause | |
| | | 5. restliches Fließmittel dazugeben und weitere 1,5 min bei niedriger Geschwindlgkeitsstufe mischen | |
| | | - | |
| Anmerkungen | | | |
| | | Ausschalen nach 1 Tag! | |

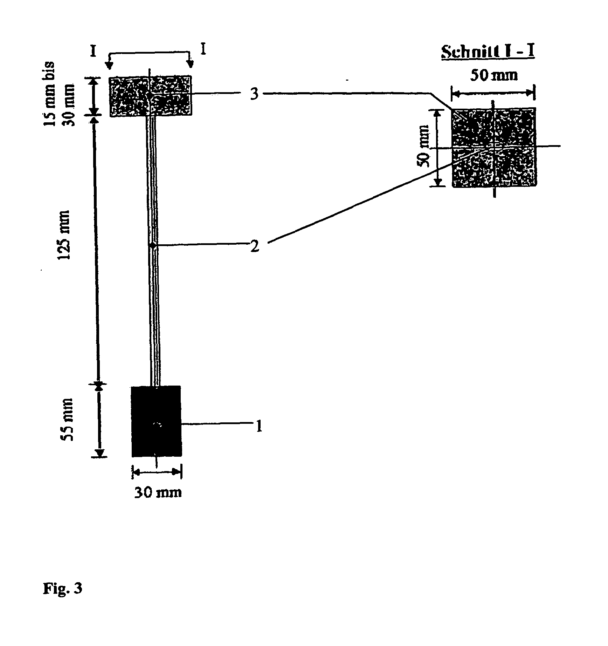

Der Aufbau und die Maße eines Pull-Out-Probekörpers sowie der Versuchsaufbau sind in Fig. 3 dargestellt.

Der Probenhalter 1 wurde an einem Kardangelenk aufgehängt, um den Momenten- bzw. Querkrafteinfluss gering zu halten. Eine Gummiauflage glich kleine Unebenheiten auf der Oberfläche des Betonquaders aus und sorgt so für eine gleichmäßigere Druckverteilung.

Die Prüfgeschwindigkeit bei den Prüfungen betrug 5 mm/min. Die Rovings 2 waren 20mm im Beton eingebettet

Beim "Pull-Out"-Versuch sind ist die Kraft entscheidend, bei der sich der Roving 2 von der Betonmatrix 3 löst und herauszurutschen beginnt.

**Kraft, bei der der Roving beginnt, aus dem dem Beton herauszurutschen:**

| **Rezeptur Nr.** | **1** (Vergleich) | **2** (Vergleich) | **3** (erf. gemäß) | **4** (erf. gemäß) | **5** (erf. gemäß) |
|---|---|---|---|---|---|
| **Mittelwert [N]** | **75** | **99** | **148** | **177** | **167** |
| **Standardabweichung [N]** | **-** | **14** | **19** | **29** | **24** |
| **Probenanzahl** | **1** | **3** | **5** | **5** | **4** |

## Patentansprüche

1. Verwendung von getränkten Faserprodukten zur Armierung von Beton und anderen Produkten auf Basis von Zement, wobei die getränkten Faserprodukte aus
A) Faserprodukten aus der Gruppe bestehend aus Fasern, Rovings, Garnen, Textilien, Gewirken, Gelegen und Vliesstoffen und
B) Zubereitungen aus
a) 20 - 99 Gew.-% einer wässrigen Dispersion auf Basis von Polychloropren,
b) 1-80 Gew.-% einer wässrigen Suspension auf Basis von anorganischen Feststoffen aus der Gruppe der Oxide, Carboxide und Silikate, die zu mehr als 20 Gew.-% aus Siliciumdioxid, bevorzugt Silanol-Gruppen enthaltend, besteht, mit einer Primärpartikelgröße zwischen 1 bis 400 nm,
c) gegebenenfalls zusätzlich anderen Polymer-Dispersionen, insbesondere aus der Gruppe der Polyacrylate, Polyacetate, Polyurethane, Polyharnstoffe, Kautschuke und Epoxide sowie
d) gegebenenfalls zusätzlich enthaltend bei Polymerdispersionen üblichen Additiven bestehen.

2. Verstärkte Beton- und Zement-basierende Produkte enthaltend getränkte Faserprodukte aus
A) Faserprodukten aus der Gruppe bestehend aus Fasern, Rovings, Garnen, Textilien, Gewirken, Gelegen und Vliesstoffen und
B) Zubereitungen aus
a) 20 - 99 Gew.-% einer wässrigen Dispersion auf Basis Polychloropren,
b) 1-80 Gew.-% einer wässrigen Suspension auf Basis von anorganischen Feststoffen aus der Gruppe der Oxide, Carboxide und Silikate, die zu mehr als 20 Gew.-% aus Siliciumdioxid, bevorzugt Silanol-Gruppen enthaltend, besteht, mit einer Primärpartikelgröße zwischen 1 bis 400 nm,
c) gegebenenfalls zusätzlich anderen Polymer-Dispersionen, insbesondere aus der Gruppe der Polyacrylate, Polyacetate, Polyurethane, Polyharnstoffe, Kautschuke und Epoxide sowie
d) gegebenenfalls zusätzlich enthaltend bei Polymerdispersionen üblichen Additiven
sowie die getränkten Faserprodukte umschließende Beton- oder Zement- basierende Produkte.

3. Verstärkte Beton- und Zement- basierende Produkte gemäß Anspruch 2, wobei die Zubereitungen zusätzlich bis zu 10 Gew.-% Zinkoxid enthalten.

## Claims

1. Use of impregnated fibrous products for reinforcing concrete and other products based on cement, the impregnated fibrous products consisting of
A) fibrous products from the group consisting of fibres, rovings, yarns, textiles, knits, laid scrims and fibrous nonwoven webs, and
B) preparations comprising
a) 20 - 99 wt.% of an aqueous dispersion based on polychloroprene,
b) 1 - 80 wt.% of an aqueous suspension based on inorganic solids from the group of the oxides, carboxides and silicates which consists to an extent of more than 20 wt.% of silicon dioxide, preferably containing silanol groups, having a primary particle size between 1 to 400 nm,
c) optionally additionally other polymer dispersions, in particular from the group of the polyacrylates, polyacetates, polyurethanes, polyureas, rubbers and epoxides, and also
d) optionally additionally containing customary additives for polymer dispersions.

2. Reinforced concrete and cement-based products containing impregnated fibrous products from
A) fibrous products from the group consisting of fibres, rovings, yarns, textiles, knits, laid scrims and fibrous nonwoven webs, and
B) preparations comprising
a) 20 - 99 wt.% of an aqueous dispersion based on polychloroprene,
b) 1 - 80 wt.% of an aqueous suspension based on inorganic solids from the group of the oxides, carboxides and silicates which consists to an extent of more than 20 wt.% of silicon dioxide, preferably containing silanol groups, having a primary particle size between 1 to 400 nm,
c) optionally additionally other polymer dispersions, in particular from the group of the polyacrylates, polyacetates, polyurethanes, polyureas, rubbers and epoxides, and also
d) optionally additionally containing customary additives for polymer dispersions,
and also concrete or cement-based products enclosing the impregnated fibrous products.

3. Reinforced concrete and cement-based products according to Claim 2, wherein the preparations additionally contain up to 10 wt.% of zinc oxide.

## Revendications

1. Utilisation de produits en fibres imprégnés pour armer du béton et d'autres produits à base de ciment, les produits en fibres imprégnés étant constitués
A) de produits en fibres du groupe formé de fibres, mèches, filés, matières textiles, tricots, voiles et nappes, et
B) de préparations composées
a) de 20 à 99 % en poids d'une dispersion aqueuse à base de polychloroprène,
b) de 1 à 80 % en poids d'une suspension aqueuse à base de matières inorganiques solides du groupe des oxydes, carboxydes et silicates, qui est constituée à plus de 20 % en poids de dioxyde de silicium, contenant avantageusement des groupes silanol, en particules ayant une dimension primaire comprise entre 1 et 400 nm,
c) éventuellement, en outre, d'autres dispersions de polymères, en particulier du groupe des polyacrylates, des polyacétates, des polyuréthannes, des polyurées, des caoutchoucs et des époxydes, de même que
d) contenant en outre, le cas échéant, des additifs usuels pour dispersions de polymères.

2. Produits en fibres imprégnés contenant des produits renforcés à base de béton et de ciment, obtenus à partir
A) de produits en fibres du groupe formé de fibres, mèches, filés, matières textiles, tricots, voiles et nappes, et
B) de préparations composées
a) de 20 à 99 % en poids d'une dispersion aqueuse à base de polychloroprène,
b) de 1 à 80 % en poids d'une suspension aqueuse à base de matières inorganiques solides du groupe des oxydes, carboxydes et silicates, qui est constituée à plus de 20 % en poids de dioxyde de silicium, contenant avantageusement des groupes silanol, en particules ayant une dimension primaire comprise entre 1 et 400 nm,
c) éventuellement, en outre, d'autres dispersions de polymères, en particulier du groupe des polyuacrylates, des polyacétates, des polyuréthannes, des polyurées, des caoutchoucs et des époxydes, de même que
d) contenant en outre, le cas échéant, des additifs usuels pour dispersions de polymères,
ainsi que les produits à base de béton ou de ciment enrobant les produits en fibres imprégnés.

3. Produits renforcés à base de béton ou de ciment suivant la revendication 2, pour lesquels les préparations contiennent en outre jusqu'à 10 % en poids d'oxyde de zinc.
